(19) Europäisches Patentamt / European Patent Office / Office européen des brevets

(11) **EP 2 643 120 B1**

(12) **EUROPEAN PATENT SPECIFICATION**

(45) Date of publication and mention
of the grant of the patent:
**25.12.2019 Bulletin 2019/52**

(21) Application number: **10859974.7**

(22) Date of filing: **30.11.2010**

(51) Int Cl.:
*B23K 26/06* *(2014.01)*   *B23K 26/04* *(2014.01)*

(86) International application number:
**PCT/US2010/058350**

(87) International publication number:
**WO 2012/071050 (31.05.2012 Gazette 2012/22)**

(54) **BEAM SHAPER AND METHOD FOR LASER TREATING WORKPIECE**

STRAHLFORMER UND VERFAHREN ZUR LASERBEARBEITUNG VON WERKSTÜCKEN

DISPOSITIF DE MISE EN FORME DE FAISCEAU ET PROCÉDÉ PERMETTANT DE TRAITER AU LASER UNE PIÈCE À USINER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2010 RU 2010147573**

(43) Date of publication of application:
**02.10.2013 Bulletin 2013/40**

(73) Proprietor: **IPG Photonics Corporation**
**Oxford, Massachusetts 01540 (US)**

(72) Inventors:
• **GAPONTSEV, Valentin**
  **Oxford, MA 01540 (US)**
• **SOKOLOV, Viktor**
  **Oxford, MA 01540 (US)**
• **ANTONENKO, Vladimir**
  **Oxford, MA 01540 (US)**
• **SAMARTSEV, Igor**
  **Oxford, MA 01540 (US)**

(74) Representative: **Kohlmann, Kai**
  **Donatusstrasse 1**
  **52078 Aachen (DE)**

(56) References cited:
**US-A- 4 979 180**    **US-A- 5 140 608**
**US-A- 5 331 468**    **US-A1- 2009 032 511**
**US-A1- 2009 032 511**    **US-A1- 2010 072 180**

**Description**

BACKGROUND OF THE DISCLOSURE

1. Field of the disclosure

The disclosure relates to laser-based systems for material processing. More specifically, the disclosure relates to laser systems operative to thermally treat a workpiece with a beam which is characterized by a substantially homogeneous intensity distribution.

2. Prior Art Discussion

Lasers are used in a variety of systems and applications. A laser beam radiated in a fundamental mode typically has a disc-like cross-section and Gaussian energy distribution. A Gaussian beam strikes a target as a spot of energy having the intensity peak at its center. However, a variety of laser applications require a "flat top" intensity profile with a substantially uniform energy distribution.

For example, using the Gaussian beam for a thermal treatment of surfaces causes undesirable temperature gradients on the surface which, in turn, may cause unsatisfactory results. To avoid the latter, it is desirable that the spot on the material have the geometry with a well defined periphery and substantially uniform intensity distribution in the area within the periphery. The spot may have a circular or polygonal shape and have the intensity distribution which is more uniform than that one of the Gaussian intensity profile. For example, the beam spot may be shaped as a $0.5\times10\ MM^2$ or $1\times10\ MM^2$ rectangular with the intensity distribution varying in about $\pm20\%$ range along the long side.

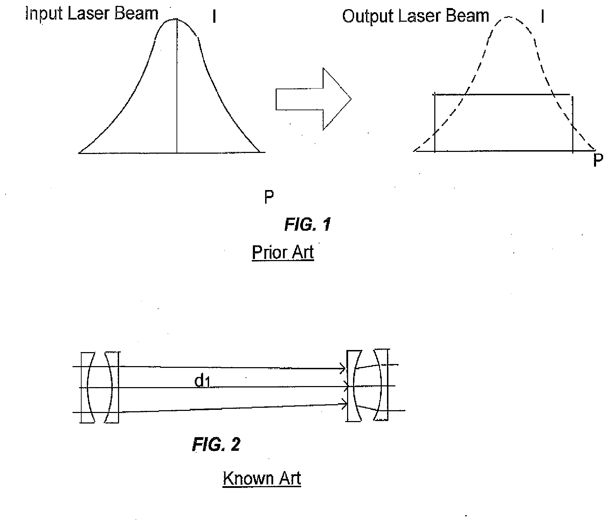

FIG. 1 illustrates a known beam-shaping technique which includes transforming Gaussian or non-uniform beam profile into a quasi-collimated radiation with a substantially homogeneous intensity distribution having a uniform "flat-top" profile. The technique is explained in US2009/0032511 A1 disclosing a system which carries out this technique by means of numerous micro-lenses. The disclosed system is operative to deal only with preheated surfaces and not efficient at high powers because the unacceptable power losses at numerous micro-lenses.

FIG. 2 illustrates another known beam shaping technique implemented by an achromatic optical system and disclosed in EP 1998 215 A1. The system is configured to transform a light beam characterized by Gaussian intensity distribution to a beam with substantially uniformly distributed intensity. The transformation is attained by two groups of aspheric lenses configured with different achromatic dispersion. The disclosed system is cost ineffective because the manufacturing of aspheric surfaces is time consuming and labor intensive. Furthermore, a variety of laser beam applications the achromatic dispersion is not necessary.

A need therefore exists for a cost-effective and highly efficient optical system and method for transforming a high power laser beam with a Gaussian intensity distribution to a substantially homogeneous intensity distribution on the surface of material to be thermally treated.

SUMMARY OF THE DISCLOSURE

The disclosed high-power laser system includes a beam shaper provided with a cartridge removably mounted on a laser head. The beam shaper includes optical elements manufactured in a labor- and cost-effective manner and operative to transform a laser beam with a heterogeneous intensity distribution to the laser beam with a substantially uniform energy distribution.

In accordance with one aspect of the disclosure, a laser head is provided with the disclosed beam shaper configured with a combination of spherical lenses and Fresnel biprism. The lenses are arranged along a light path with the Fresnel biprism being spaced downstream from the spherical lens. The beam spot on the surface to be thermally treated has a rectangular shape with the substantially evenly distributed intensity within the spot's periphery in the desired direction.

In a further aspect of the disclosure, the disclosed beam-shaper is configured with a single optical bi-prism component which is removably mounted to the laser head. The beam shaper is provided with a unitary body configured to have cylindrical and Fresnel lens components. The beam shaper of this embodiment, like the one of the previous embodiment, is structured so that both lenses have respective focal lengths terminating in the same plane.

A further aspect of the disclosure, the beam shaper is configured with a conical lens. Analogously to the previously disclosed aspects, a light spot is formed in the focal plane of the conical lens, but in contrast to the former, the spot is circular with a well defined periphery and substantially uniform intensity distribution in the periphery- delimited area.

BRIEF DESCRIPTION OF THE DRAWINGS

The above and other features and advantages will become more readily apparent in conjunction with the accompanying drawings, in which:

FIG. 1 is a diagrammatic presentation of light beam having a Gaussian intensity distribution and a homogeneous "flat-top" intensity distribution;

FIG. 2 is an optical scheme of beam shaper configured in accordance with known prior art;

FIG. 3 is a diagrammatic view of the disclosed laser head with beam shaper;

FIG. 4 is the optical scheme of one modification of the beam shaper shown in FIG. 3;

FIG. 5A is a 3-D presentation of a Gaussian intensity distribution;

FIG. 5B is a 2-D flat-top intensity distribution attained by the beam shaper of FIG. 4;

FIG. 6 is a diagrammatic illustration of the optical operation of a Fresnel lens;

FIG. 7 is an optical schematic of a further embodiment of beam shaper having a conical lens; the intensity distribution of a transformed Gaussian beam is shown as formed in the focal plane of the conical lens; and

FIG. 8 is the optical schematic of the beam shaper of FIG. 7 with an intensity distribution shown in a plane beyond the focal one.

SPECIFIC DESCRIPTION

Reference will now be made in detail to the disclosed system. Wherever possible, same or similar reference numerals are used in the drawings and the description to refer to the same or like parts or steps. The drawings are in simplified form and are far from precise scale. For purposes of convenience and clarity only, the directional terms "above, below, beyond" and similar terms with their inflectional morphemes are referred to relative to the plane of the drawing sheets.

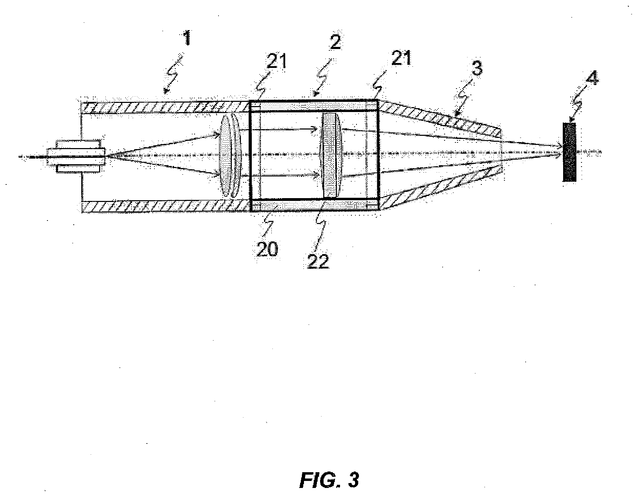

FIG. 3 illustrates a laser head associated with a high power fiber laser, such as YLR-5000 by IPG Photonics Corporation, and operative to output a collimated beam reaching a kW level . The laser head includes a collimator 1 receiving a delivery fiber which radiates a beam with close to Gaussian intensity distribution or a multimode beam with a Bell-like intensity distribution along a path. The collimated beam is incident on a beam shaper 2 provided with a cartridge 20 which is configured to be removably mounted to the output region of collimator 1.

The beam shaper 2 is operative to transform a collimated radiation with a substantially Gaussian intensity distribution to a non-parallel radiation with a substantially homogeneous intensity distribution which has a flat-top profile. The downstream end of cartridge 20 may receive a termination block 3 which can be decoupled from the cartridge of shaper 2. The termination block 3 guides the beam to a workpiece 4. The upstream and downstream ends of cartridge 20 can be threaded at 21 to engage respective threaded ends of collimator 1 and block 3, respectively.

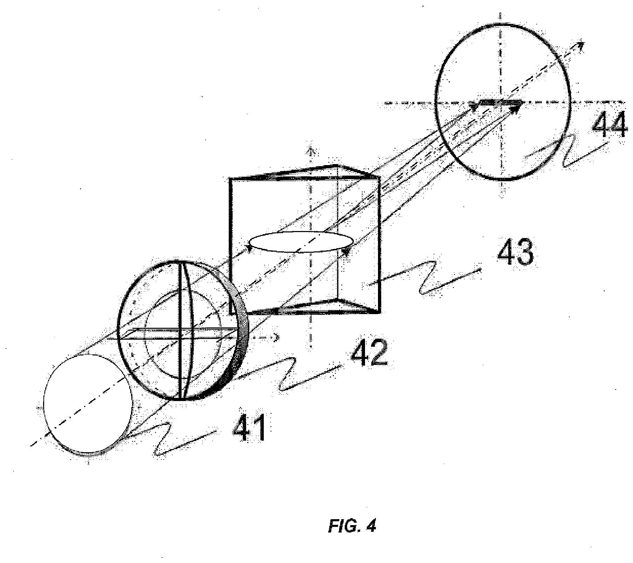

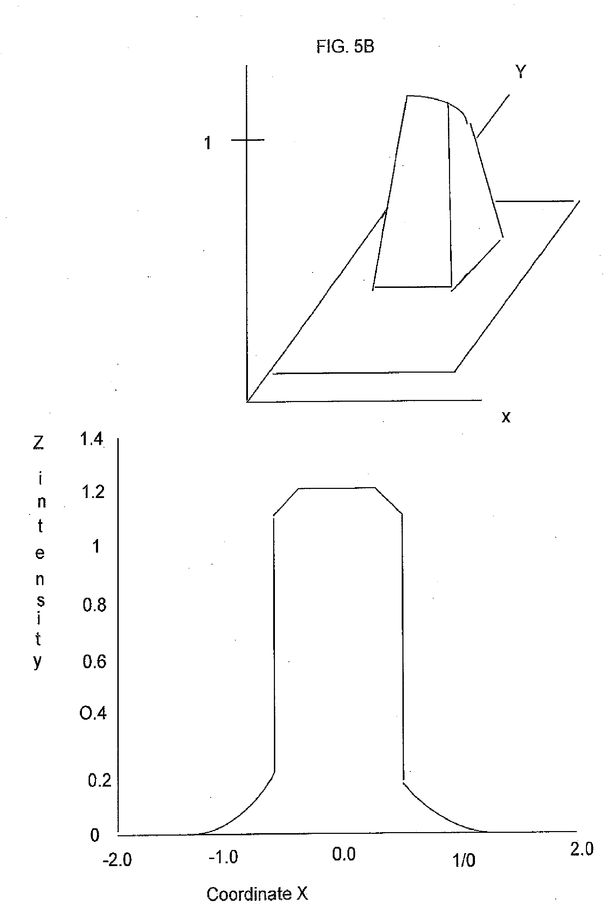

FIGs. 4, 5A and 5B illustrate an optical schematic of beam shaper 2 which includes a combination of a cylindrical lens 42 and a Fresnel bi-prism 43 enclosed in the cartridge of the shaper. FIG. 5B illustrates the Gaussian intensity distribution profile of collimated beam 41 of FIG. 4 incident on the disclosed beam shaper of FIG. 4. FIG. 5A shows a substantially flat-top intensity distribution profile of the beam incident on the surface to be treated which is located downstream from beam shaper 2 along a light path.

As known to those skilled in the art, if a beam with Gaussian intensity distribution is split along its axis of symmetry into two halves, which are further displaced towards one another at the radius of this beam, then the resulted intensity distribution will be substantially uniform. The beam shaper 2 realizes the above as disclosed hereinbelow.

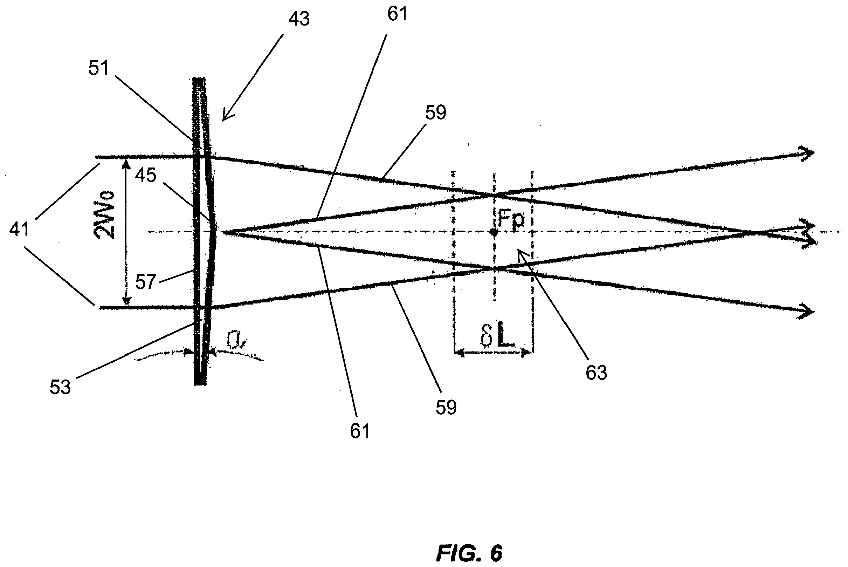

FIG. 6 illustrates the principle of operation of Fresnel biprism 43. The biprism 43 is configured with two thin halves 51 and 53, respectively, each having a prism angle $\alpha$ and joined together at respective bases to define an apex obtuse angle with a central tip or rib 45 along which the above-disclosed phenomenon is observed. The collimated beam 41 with the radius $W_0$ is incident on a plane face 57 and exits at the opposite face with the beam being split by the halves of the prism. The non-parallel merging and diverging beams 59 and 61, respectively, form the overlap region referred to as a caustic region 63 with a distance Fp between rib 45 and median or "focal" plane being which is determined as follows:

$$F_p = \frac{W_0}{2 \cdot \alpha \cdot (n-1)}$$

wherein Wo - radius of the collimated beam, n - refractive index of Fresnel prism. The cross-section area of caustic region 63 is at most 10% more than radius $W_0$. The length of the caustic region is determined as follows:

$$\delta L = 0,2 * F_p$$

The above formulas are given for a small angle $\alpha$

Turning back to FIG. 4, the beam shaper is configured so that lens 42 has a focal plane coinciding with the overlap region of biprism 43. The collimated beam 41 is incident on cylindrical lens 42 configured to focus beam 41 in one direction of the focal plane, for example, along a vertical axis "y". The beam is further incident on Fresnel prism 43 focusing the beam in a direction orthogonal to that one of lens 42, i.e. along horizontal axis "x". In the schematics shown in FIG. 4, Fresnel prism 43 is configured to focus the received beam in the horizontal plane. As a consequence, the flat-top beam is formed in focal plane 44 common to both lens 42 and prism 43.

In summary, in order to transform a collimated symmetrical beam with Gaussian-shaped intensity distribution into an asymmetrical beam with a flat-top intensity distribution using the configuration of FIG. 4, cylindrical and Fresnel lenses 42 and 43, respectively, should focus the beam along orthogonal directions and be configured to have a common focal plane. Therefore, the collimated beam focused by cylindrical lens 42 along one direction in the common focal plane has intensity distribution close to the Gaussian profile. The beam processed by Fresnel biprism is focused along the direction orthogonal to the one direction in the common focal plane and has a substantially uniform intensity distribution. The size of the flat portion of the latter is approximately equal to a radius of the collimated beam $W_0$ incident on the shaper. If a fiber laser is used as a light source, the dimension of the caustic region is determined by the core size and gain coefficient of the collimator-cylindrical lens configuration.

Alternatively, the beam shaper of FIG. 4 may have the cylindrical lens and Fresnel bi-prism configured as a one-piece optical component operative to shape beam collimated Gaussian beam 41 into the beam characterized by uniform intensity distribution. Similar to a two-element schematic, the integrally configured cylindrical and Fresnel lenses have coinciding focal distances.

The technology designed for manufacturing a single-body lens-biprism optical component can be based on standard equipment. The cost of manufacturing of the single-body beam shaper may even be lower than that of the shaper of FIG. 4.

The modeling of quasi-Gaussian, linearly-polarized single-frequency radiation propagating through the cylindrical and Fresnel lenses can be realized in a parabolic approximation. The intensity of distribution is set to be Gaussian, whereas the wave front is determined by a BPP of laser beam.

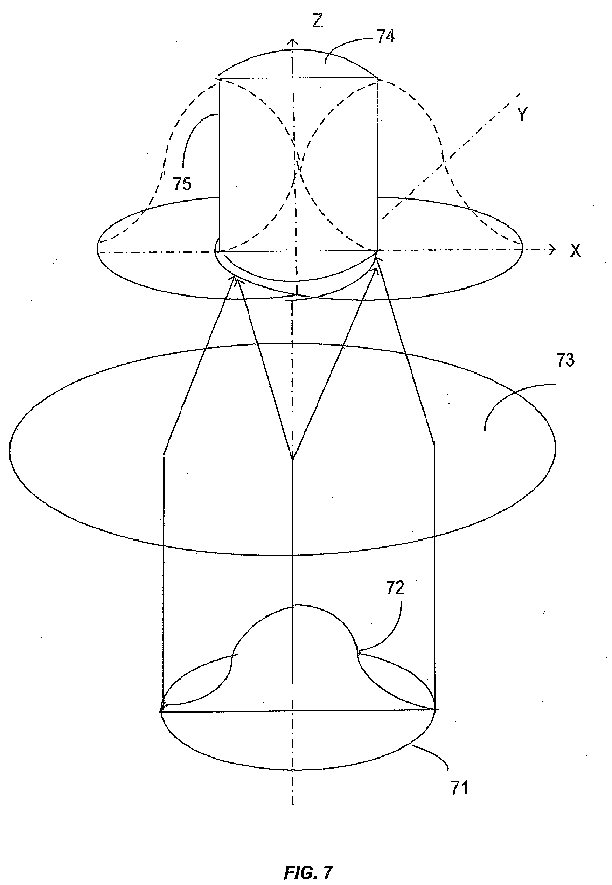

FIG. 7 illustrates the disclosed beam shaper configured to transform a collimated, radially-symmetrical Gaussian beam 72 to a substantially uniform intensity having a circular spot. The beam shaper is configured with a conical lens 73 located downstream from a collimator 71. The focal plane of lens 73, similarly to a Fresnel biprism, has a circular spot 75 with a well-defined border and substantially uniform intensity distribution in all directions.

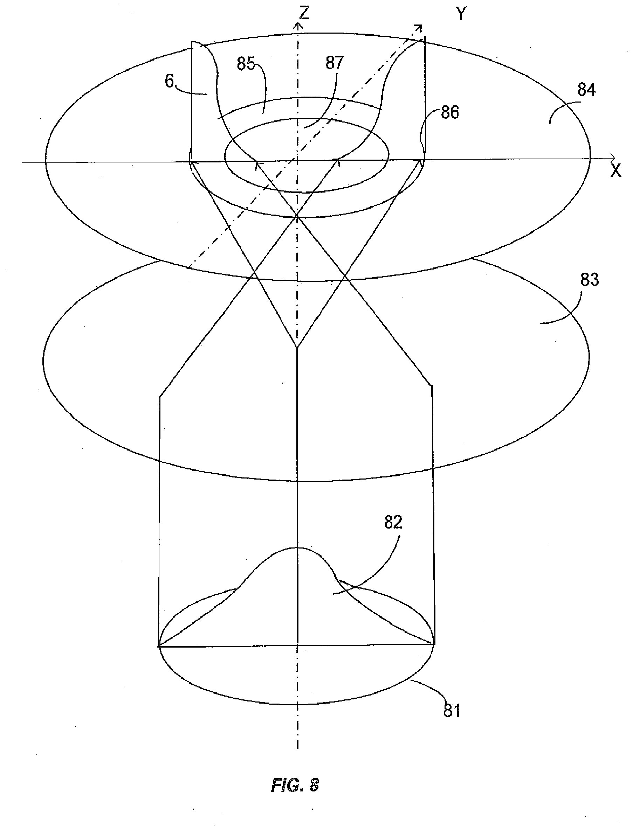

FIG. 8 illustrates one of possible applications - perforation - of the beam shaper of FIG. 7. If material to be perforated is located downstream from the focal plane, i.e., at a distance greater than the focal distance of lens 83, then a circular spot 85 is formed on surface 84 of the material. The outer border 86 of spot 85 is highly contrasting which improves the formation of holes 87. But the energy of collimated, radially symmetrical laser Gaussian radiation 81 is concentrated along a well contrasted border 86 of spot 85, and not across area 82. As a consequence, the efficiency and quality of perforated openings 86 are high.

A laser head provided with the disclosed beam shaper is compact, has very few components none of which has an aspheric structure that substantially reduces the cost of the head manufacturing. The disclosed laser head can be used with different types of lasers including fiber lasers which can radiate a beam within a w - kW range and with a Gaussian profile. The applications of the disclosed beam shaper may include, but not limited to cutting, marking, welding, soldering and etc.

Having described the embodiments of the present invention with reference to the drawings, it is to be understood that the invention is not limited to these precise embodiments.

## Claims

1. A laser system comprising a portable beam shaper (2), the beam shaper (2) having:

   - a cartridge (20),
   - an optical system mounted in the cartridge (20) and configured to transform a collimated input beam (41) with a Gaussian intensity distribution profile into an output beam with a substantially uniform intensity profile, wherein the cartridge (20) has opposite threaded ends (21) configured to be removably engaged by respective optical components.

2. The laser system of claim 1, wherein the optical system has a cylindrical lens (42) and a Fresnel biprism (43) which are mounted in the cartridge (20) along a path of the input beam (41), the cylindrical lens (42) and Fresnel biprism (43) being configured to have a common focal plane.

3. The laser system of claim 2, wherein the Fresnel biprism (43) and cylindrical lens (42) are mounted to the cartridge (20) independently from one another.

4. The laser system of claim 2, wherein the cylindrical lens and Fresnel biprism form a unitary body (22) mounted to the cartridge.

5. The laser system of claim 2, wherein the output beam has a rectangular shape in the focal plane with the uniform intensity distribution in a direction transverse to an elongated rib (45) of the Fresnel biprism (43).

6. The laser system of claim 1, wherein the optical system has a conical lens (73) operative to form the output beam with a circular shape (75) in a focal plane thereof.

7. The laser system of claim 6, wherein the output beam produces a ring-shaped spot (85) downstream from the focal plane with a maximum intensity distributed along a periphery (86) of the spot and a minimum intensity in a center of the spot.

8. The laser system of claim 1 further comprising a collimator (1) configured to collimate the input beam, the collimator (1) having a downstream threaded end detachably engaging one of the treaded ends (21) of the beam shaper (2), and a termination block (3) provided with a threaded upstream end detachably engaging the other threaded end (21) of the beam shaper (2).

9. A method for laser treating a workpiece comprising training a collimated beam (41) with a Gaussian intensity profile at a beam shaper (2), wherein the beam shaper (2) has a cartridge (20) with opposite threaded ends (21); and guiding the collimated beam (41) through an optical system mounted in the cartridge (20) and configured to transform a collimated input beam (41) with a Gaussian intensity distribution profile into an output beam with a substantially uniform intensity profile.

10. The method of claim 9 further comprising positioning the beam shaper (2) so that a surface of the workpiece (4) is located in a focal plane of the beam shaper (2), thereby forming a beam spot on the surface with a shape having one of polygonal and circular shapes.

11. The method of claim 10, wherein the optical system is configured with a cylindrical lens and a Fresnel biprism, the cylindrical lens (42) and Fresnel biprism (43) being configured to have respective focal planes coincide with one another so that the beam spot has a polygonal shape.

12. The method of claim 11, wherein the cylindrical lens (42) and Fresnel biprism (43) are mounted to the cartridge (20) independently from one another.

13. The method of claim 11, wherein the optical system has a unitary body (22) provided with the cylindrical lens and Fresnel biprism.

14. The method of claim 10, wherein the optical system is configured with a conical lens (73) configured to provide the beam spot (85) with the circular shape.

15. The method of claim 9 further comprising positioning the beam shaper (2) so that a surface (84) of the workpiece (4) is located beyond a focal plane of the beam shaper (2), the beam shaper (2) being configured with a conical lens (73) shaping the output beam so that a beam spot (85) on the surface (84) of the workpiece (4) is ring-shaped with an intensity of the output beam being maximum along a periphery (86) of the ring-shaped beam spot (85).

16. The method of claim 9 further comprising detachably attaching a collimator (1) and a termination block (3) to respective opposite ends of the beam shaper (2).

**Patentansprüche**

1. Lasersystem, umfassend einen tragbaren Strahlformer (2), wobei der Strahlformer (2) aufweist:

- eine Kassette (20),
- ein optisches System, das in der Kassette (20) montiert und konfiguriert ist, einen kollimierten Eingangsstrahl (41) mit einem Gauß'schen Intensitätsverteilungsprofil in einen Ausgangsstrahl mit einem im Wesentlichen gleichmäßigen Intensitätsprofil umzuwandeln, wobei die Kassette (20) entgegengesetzte Enden (21) mit Gewinde aufweist, die konfiguriert sind, lösbar mit jeweiligen optischen Komponenten in Eingriff zu gelangen.

2. Lasersystem nach Anspruch 1, wobei das optische System eine zylindrische Linse (42) und ein Fresnel-Doppelprisma (43) aufweist, die in der Kassette (20) entlang eines Pfads des Eingangsstrahls (41) montiert sind, wobei die zylindrische Linse (42) und das Fresnel-Doppelprisma (43) konfiguriert sind, eine gemeinsame Brennebene aufzuweisen.

3. Lasersystem nach Anspruch 2, wobei das Fresnel-Doppelprisma (43) und die zylindrische Linse (42) unabhängig voneinander an der Kassette (20) montiert sind.

4. Lasersystem nach Anspruch 2, wobei die zylindrische Linse und das Fresnel-Doppelprisma einen einheitlichen Körper (22) bilden, der an der Kassette montiert ist.

5. Lasersystem nach Anspruch 2, wobei der Ausgangsstrahl eine rechteckige Form in der Brennebene aufweist, mit der gleichmäßigen Intensitätsverteilung in einer Richtung quer zu einer Längsrippe (45) des Fresnel-Doppelprismas (43).

6. Lasersystem nach Anspruch 1, wobei das optische System eine konische Linse (73) aufweist, die betriebsfähig ist, den Ausgangsstrahl mit einer kreisrunden Form (75) in einer Brennebene davon zu bilden.

7. Lasersystem nach Anspruch 6, wobei der Ausgangsstrahl einen ringförmigen Punkt (85) stromabwärts der Brennebene erzeugt, mit einer maximalen Intensität, die entlang einer Peripherie (86) des Punkts verteilt ist, und einer minimalen Intensität in einem Mittelpunkt des Punkts.

8. Lasersystem nach Anspruch 1, weiter umfassend einen Kollimator (1), der konfiguriert ist, den Eingangsstrahl zu bündeln, wobei der Kollimator (1) ein stromabwärtiges Ende mit Gewinde, das abnehmbar mit einem der Enden (21) mit Gewinde des Strahlformers (2) in Eingriff gelangt, und einen Abschlussblock (3) aufweist, der mit einem stromaufwärtigen Ende mit Gewinde, das abnehmbar mit dem anderen Ende (21) mit Gewinde des Strahlformers (2) in Eingriff gelangt, bereitgestellt ist.

9. Verfahren zur Laserbearbeitung eines Werkstücks, umfassend Ausbilden eines kollimierten Strahls (41) mit einem Gauß'schen Intensitätsprofil bei einem Strahlformer (2), wobei der Strahlformer (2) eine Kassette (20) mit entgegengesetzten Enden (21) mit Gewinde aufweist; und
Leiten des kollimierten Strahls (41) durch ein optisches System, das in der Kassette (20) montiert und konfiguriert ist, einen kollimierten Eingangsstrahl (41) mit einem Gauß'schen Intensitätsverteilungsprofil in einen Ausgangsstrahl mit einem im Wesentlichen gleichmäßigen Intensitätsprofil umzuwandeln.

10. Verfahren nach Anspruch 9, weiter umfassend Positionieren des Strahlformers (2), sodass eine Oberfläche des Werkstücks (4) in einer Brennebene des Strahlformers (2) liegt, wodurch ein Strahlpunkt auf der Oberfläche mit einer Form gebildet wird, die eine von polygonalen und kreisrunden Formen aufweist.

11. Verfahren nach Anspruch 10, wobei das optische System mit einer zylindrischen Linse und einem Fresnel-Doppelprisma konfiguriert ist, wobei die zylindrische Linse (42) und das Fresnel-Doppelprisma (43) konfiguriert sind, jeweilige Brennebenen aufzuweisen, die zusammenfallen, sodass der Strahlpunkt eine polygonale Form aufweist.

12. Verfahren nach Anspruch 11, wobei die zylindrische Linse (42) und das Fresnel-Doppelprisma (43) unabhängig voneinander an der Kassette (20) montiert sind.

13. Verfahren nach Anspruch 11, wobei das optische System einen einheitlichen Körper (22) hat, der mit der zylindrischen Linse und dem Fresnel-Doppelprisma bereitgestellt ist.

14. Verfahren nach Anspruch 10, wobei das optische System mit einer konischen Linse (73) konfiguriert ist, die konfiguriert ist, den Strahlpunkt (85) mit der kreisrunden Form bereitzustellen.

15. Verfahren nach Anspruch 9, weiter umfassend Positionieren des Strahlformers (2), sodass eine Oberfläche (84) des Werkstücks (4) über eine Brennebene des Strahlformers (2) hinaus liegt, wobei der Strahlformer (2) mit einer konischen Linse (73) konfiguriert ist, die den Ausgangsstrahl so formt, dass ein Strahlpunkt (85) auf der Oberfläche (84) des Werkstücks (4) ringförmig ist, wobei eine Intensität des Ausgangsstrahls entlang einer Peripherie (86) des ringförmigen Strahlpunkts (85) maximal ist.

16. Verfahren nach Anspruch 9, weiter umfassend abnehmbares Befestigen eines Kollimators (1) und eines Abschlussblocks (3) an jeweils entgegengesetzten Enden des Strahlformers (2).

**Revendications**

1. Système laser comprenant un dispositif portable de mise en forme de faisceau (2), le dispositif de mise en forme de faisceau (2) ayant :

   - une cartouche (20),
   - un système optique monté dans la cartouche (20) et configuré pour transformer un faisceau d'entrée collimaté (41) avec un profil de répartition d'intensité gaussien en un faisceau de sortie avec un profil d'intensité sensiblement uniforme, dans lequel la cartouche (20) a des extrémité filetées (21) opposées configurées pour être mises en prise de façon amovible par des composants optiques respectifs.

2. Système laser selon la revendication 1, dans lequel le système optique a une lentille cylindrique (42) et un biprisme de Fresnel (43) qui sont montés dans la cartouche (20) le long d'un trajet du faisceau d'entrée (41), la lentille cylindrique (42) et le biprisme de Fresnel (43) étant configurés pour avoir un plan focal commun.

3. Système laser selon la revendication 2, dans lequel le biprisme de Fresnel (43) et la lentille cylindrique (42) sont montés dans la cartouche (20) indépendamment l'un de l'autre.

4. Système laser selon la revendication 2, dans lequel la lentille cylindrique et le biprisme de Fresnel forment un corps unitaire (22) monté dans la cartouche.

5. Système laser selon la revendication 2, dans lequel le faisceau de sortie a une forme rectangulaire dans le plan focal avec la répartition d'intensité uniforme dans une direction transversale à une nervure allongée (45) du biprisme de Fresnel (43).

6. Système laser selon la revendication 1, dans lequel le système optique a une lentille conique (73) opérative pour former le faisceau de sortie avec une forme circulaire (75) dans un plan focal de celle-ci.

**7.** Système laser selon la revendication 6, dans lequel le faisceau de sortie produit un spot annulaire (85) en aval du plan focal avec une répartition d'intensité maximale le long d'une périphérie (86) du spot et une intensité minimale dans un centre du spot.

**8.** Système laser selon la revendication 1, comprenant en outre un collimateur (1) configuré pour collimater le faisceau d'entrée, le collimateur (1) ayant une extrémité filetée en aval se mettant en prise de façon amovible avec l'une des extrémités filetées (21) du dispositif de mise en forme de faisceau (2), et un bloc de terminaison (3) doté d'une extrémité amont filetée se mettant en prise de façon amovible avec l'autre extrémité filetée (21) du dispositif de mise en forme de faisceau (2).

**9.** Procédé pour le traitement laser d'une pièce à usiner comprenant la formation d'un faisceau collimaté (41) avec un profil d'intensité gaussien au niveau d'un dispositif de mise en forme de faisceau (2), dans lequel le dispositif de mise en forme de faisceau (2) a une cartouche (20) avec des extrémités filetées opposées (21) ; et
le guidage du faisceau collimaté (41) à travers un système optique monté dans la cartouche (20) et configuré pour transformer un faisceau d'entrée collimaté (41) avec un profil de répartition d'intensité gaussien en un faisceau de sortie avec un profil d'intensité sensiblement uniforme.

**10.** Procédé selon la revendication 9, comprenant en outre le positionnement du dispositif de mise en forme de faisceau (2) de manière à ce qu'une surface de la pièce à usiner (4) soit située dans un plan focal du dispositif de mise en forme de faisceau (2) en formant de la sorte un spot de faisceau sur la surface avec une forme ayant l'une parmi une forme polygonale et une forme circulaire.

**11.** Procédé selon la revendication 10, dans lequel le système optique est configuré avec une lentille cylindrique et un biprisme de Fresnel, la lentille cylindrique (42) et le biprisme de Fresnel (43) étant configurés pour avoir des plans focaux respectifs coïncidant l'un avec l'autre de sorte que le spot de faisceau a une forme polygonale.

**12.** Procédé selon la revendication 11, dans lequel la lentille cylindrique (42) et le biprisme de Fresnel (43) sont montés dans la cartouche (20) indépendamment l'un de l'autre.

**13.** Procédé selon la revendication 11, dans lequel le système optique a un corps unitaire (22) doté de la lentille cylindrique et du biprisme de Fresnel.

**14.** Procédé selon la revendication 10, dans lequel le système optique est configuré avec une lentille conique (73) configurée pour conférer au spot de faisceau (85) la forme circulaire.

**15.** Procédé selon la revendication 9, comprenant en outre le positionnement du dispositif de mise en forme de faisceau (2) de manière à ce qu'une surface (84) de la pièce à usiner (4) soit située au-delà d'un plan focal du dispositif de mise en forme de faisceau (2), le dispositif de mise en forme de faisceau (2) étant configuré avec une lentille conique (73) mettant en forme le faisceau de sortie de sorte qu'un spot de faisceau (85) sur la surface (84) de la pièce à usiner (4) soit de forme annulaire avec une intensité du faisceau de sortie qui est maximale le long d'une périphérie (86) du spot de faisceau annulaire (85).

**16.** Procédé selon la revendication 9, comprenant en outre la fixation de manière amovible d'un collimateur (1) et d'un bloc de terminaison (3) à des extrémités opposées respectives du dispositif de mise en forme de faisceau (2).

Input Laser Beam    I           Output Laser Beam    I

P

P

**FIG. 1**

<u>Prior Art</u>

$d_1$

**FIG. 2**

<u>Known Art</u>

**FIG. 3**

FIG. 4

FIG. 5B

Coordinate X

**FIG. 6**

EP 2 643 120 B1

*FIG. 7*

*FIG. 8*

**EP 2 643 120 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090032511 A1
- EP 1998215 A1